# EUROPÄISCHE PATENTANMELDUNG

(11) **EP 3 832 280 A1**
(43) Veröffentlichungstag der Anmeldung: **09.06.2021**
(21) Anmeldenummer: 20206612.2
(22) Anmeldetag: 10.11.2020
(51) Int. Cl.: G01L 5/28

(54) **VERFAHREN UND VORRICHTUNG ZUR PRÜFUNG EINES BREMSSYSTEMS FÜR EIN SCHIENENFAHRZEUG**

(30) Priorität: 05.12.2019 DE 102019133256
(71) Anmelder: KNORR-BREMSE Systeme für Schienenfahrzeuge GmbH, 80809 München (DE)
(72) Erfinder: BURGER, Christian, 85646 Anzing (DE); KOCH, Jörg, 80999 München (DE); FURTWÄNGLER, Ralf, 81379 München (DE); SCHNEIDER, Stefan, 80995 München (DE); HELLER, Martin, 85716 Unterschleißheim (DE); RASEL, Thomas, 85635 Höhenkirchen-Siegertsbrunn (DE); MAYER, Reinhold, 85757 Karlsfeld (DE); HORVATH, Gabor, 1237 Budapest (HU)

(57) **Zusammenfassung**

Verfahren zum Prüfen eines Bremssystems mit einer Bremse (2) für ein Schienenfahrzeug auf einem Rad-/Schiene-Prüfstand, bei dem mindestens ein Rad (1) eines Radsatzes des Schienenfahrzeugs von einem Antriebsmotor (4) über ein Antriebssystem antreibbar ist und durch die Bremse (2) abbremsbar ist, wobei mindestens eine Betriebsgröße des Rads (1) über mindestens einen Sensor erfassbar ist, mit den folgenden Schritten:
- Bereitstellen eines mathematische Modells (10) des Schienenfahrzeugs, wobei das mindestens eine Rad (1) von dem Modell (10) umfasst ist;
- Betreiben des Antriebssystems und
- Einleiten eines simulierten Bremsvorgangs durch Ansteuern der mindestens einen Bremse (2);
- Erfassen der mindestens einen Betriebsgröße des Rads (1) und weiterleiten der erfassten Betriebsgröße an eine Simulationseinheit;
- Simulieren des kinematischen Verhaltens des Schienenfahrzeugs mithilfe des mathematischen Modells (10) unter Berücksichtigung der erfassten Betriebsgröße und Bestimmen einer Geschwindigkeit des simulierten Schienenfahrzeugs; und
- Betreiben des Antriebssystems derart, dass es die durch die Simulation bestimmte Geschwindigkeit des simulierten Schienenfahrzeugs widerspiegelt.

Die Erfindung betrifft weiter eine zur Durchführung des Verfahrens eingerichtete Vorrichtung zum Prüfen eines Bremssystems.

## Beschreibung

Die Erfindung betrifft ein Verfahren und eine Vorrichtung zur Prüfung eines Bremssystems für ein Schienenfahrzeug auf einem Rad-/Schiene-Prüfstand, wobei mindestens ein Rad eines Radsatzes des Schienenfahrzeugs durch ein Antriebssystem antreibbar ist und durch eine Bremse des zu prüfenden Bremssystems abbremsbar ist, wobei mindestens eine Betriebsgröße des Rads über mindestens einen Sensor erfassbar ist.

Bei einem Rad-/Schiene-Prüfstand wird mindestens ein Rad oder ein Radsatz eines Schienenfahrzeugs von dem Antriebssystem angetrieben, während es gleichzeitig von der Bremse des zu prüfenden Bremssystems abgebremst werden kann. Zu dem zu prüfenden Bremssystem zählt neben der Bremse, die direkt oder indirekt eine mechanische Reibkraft auf das Rad ausübt, in der Regel auch eine Bremssteuerung zur Ansteuerung eines Aktuators der Bremse. Ein Vorteil eines solchen Rad-/Schiene-Prüfstands ist, dass das Rad und die Bremse in Originalgröße geprüft werden können. Ein Antrieb des Rades erfolgt in der Regel über ein sogenanntes Schienenrad, das bei entsprechend großem Durchmesser einen Kontakt zwischen Rad und Schiene realistisch wiedergibt. Ein solcher Rad-/Schiene-Prüfstand ermöglicht es, Reibung und Adhäsion des tatsächlichen Rad-/Schiene-Systems gut nachzubilden und auch durch Wasser, Öl, Seife oder Laub veränderte Reibwerte zwischen Rad und Schiene zu berücksichtigen.

Allerdings beschränkt sich ein Rad-/Schiene-Prüfstand, auf dem Räder und Bremsen in Originalgröße getestet werden, in der Regel auf ein Rad oder maximal eine Achse oder ein Radsatz eines Schienenfahrzeugs. Eine Fahr- bzw. Bremsdynamik eines ganzen Schienenfahrzeugs kann nicht nachgebildet werden.

Um den Einfluss einer Fahr- bzw. Bremsdynamik zu berücksichtigen, ist darüber hinaus bekannt, Untersuchungen an skalierten Modellen vorzunehmen. Solche Modellprüfstände können zwar leichter mit mehreren Achsen aufgebaut werden, jedoch können Reibung und Adhäsion des Rad-Schiene-Systems nicht nachgebildet werden, da Stoffeigenschafen des Rads, der Schiene sowie der Reibelemente der Bremse nicht skalierbar auf das Modell übertragen werden können bzw. vom Modell in die Realität übertragbar sind.

Es ist eine Aufgabe der vorliegenden Erfindung, eine Vorrichtung und ein Verfahren der eingangs genannten Art zu schaffen, bei dem das Bremsverhalten eines Rads mit zugeordneter Bremse in Originalgröße geprüft werden kann und dabei sowohl Reibung und Adhäsion am Original untersuchen bzw. manipuliert werden können und gleichzeitig der Einfluss einer Fahr- und Bremsdynamik des Schienenfahrzeugs oder zumindest eines Teils des Schienenfahrzeuges berücksichtigt wird.

Diese Aufgabe wird durch ein Verfahren bzw. einer Vorrichtung mit den Merkmalen des jeweiligen unabhängigen Anspruchs gelöst. Vorteilhafte Ausgestaltungen und Weiterbildungen sind Gegenstand der abhängigen Ansprüche.

Die Erfindung wird nachfolgend anhand eines Ausführungsbeispiels mit Hilfe einer Figur näher erläutert.

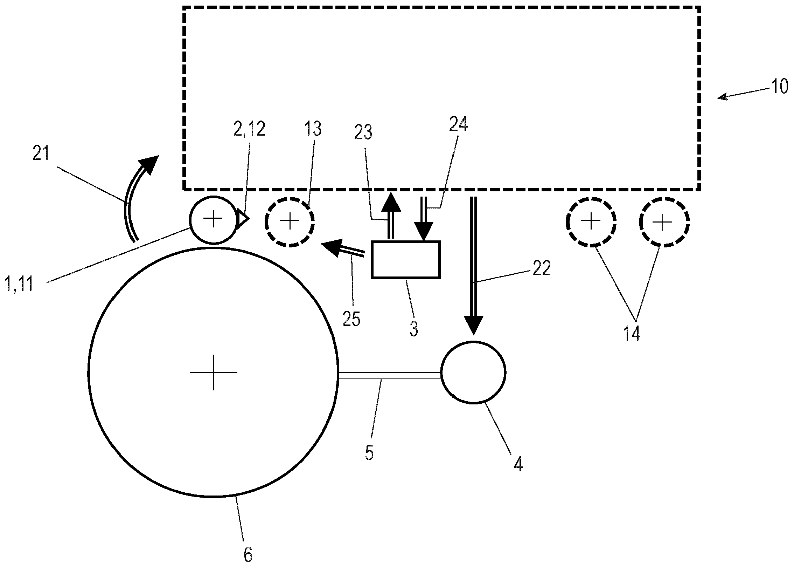

Die Figur zeigt ein schematisches Blockdiagramm eines Rad-/Schiene-Prüfstands, auf dem ein Rad 1 für ein Schienenfahrzeug als ein Prüfobjekt angeordnet ist. Dem Rad 1 ist eine Bremse 2 zugeordnet, die von einer Bremssteuerung 3 angesteuert wird. Die Bremssteuerung 3 und/oder die Bremse 2 sind, ggf, neben dem Rad 1, die Prüfobjekte, die mit der dargestellten Vorrichtung in verschiedenen Betriebszuständen überprüft werden sollen.

Um Fahr- bzw. Bremssituationen einstellen zu können, ist dem Rad 1 ein Antriebssystem zugeordnet, das einen Antriebsmotor 4, eine Antriebswelle 5 und ein Schienenrad 6 umfasst. Das Schienenrad 6 ist ein Rad mit einem Außenprofil, das dem einer Schiene entspricht. Es hat einen derart großen Durchmesser, dass in einer ersten Näherung sich zwischen dem Rad 1 und dem Schienenrad 6 ein Kontakt einstellt, der einem realen Rad-Schiene-Kontakt entspricht. Das Schienenrad 6 wird über die Antriebswelle 5 vom Antriebsmotor 4 gedreht.

Im Betrieb der Vorrichtung werden Betriebsgrößen des Rades 1 und/oder der Bremse 2 über hier nicht dargestellte Sensoren erfasst. Insbesondere wird vom Rad 1 eine Drehgeschwindigkeit gemessen. Zur Vorrichtung gehören weiter Aktoren, die das Rad 1 mit definierter und üblicherweise variierbarer Kraft auf das Schienenrad 6 drücken, um eine realistische Situation der zwischen dem Rad 1 und dem Schienenrad 6 wirkenden Kräfte einstellen zu können.

Die Besonderheit der in der Figur gezeigten Vorrichtung liegt darin, dass während der Durchführung der Prüfung das kinematische Verhalten eines Schienenfahrzeugs, dem das Rad 1 in der Realität zugeordnet ist, anhand eines mathematischen Modells 10 modelliert wird. Als Ergbnis der Modellierung wird eine Geschwindigkeit des simulierten Schienenfahrzeugs bestimmt und das Antriebssystem so angesteuert, dass das Schienenrad 6 die ermittelte Geschwindigkeit als Umfangsgeschwindigkeit annimmt. Im Antrieb des Rades 1 durch das Schienenrad 6 spiegelt sich also die reale Fahr- und Bremsdynamik des Schienenfahrzeugs wider.

Zu diesem Zweck ist eine Steuereinrichtung der Vorrichtung vorhanden, in der das mathematische Modell 10, nachfolgend auch ein Fahrzeugmodell 10 genannt, hinterlegt ist. Dieses umfassst charakteristische Fahrzeugrößen wie Masse, Auslegung der Bremse, Fahrwiderstände sowie einen Katalog von Adhäsionsmustern aus Felddaten, welche die Interaktion der Achsen untereinander abbilden.

Zum Fahrzeugmodell 10 gehört eine Repräsentation 11 des realen Rads 1, sowie eine Repräsentation 12 der realen Bremse 2. Darüber hinaus sind Repräsentationen 13, 14 weiterer Räder, die den gleichen Radsatz wie das Rad 1 oder auch weiteren Radsätzen angehören, in dem Fahrzeugmodell 10 modelliert. Betriebsparameter der weiteren Räder, insbesondere eine Drehgeschwindigkeit, werden von dem realen Rad 1, bzw. dessen Repräsentation 11, übernommen. Es kann eine beliebige, einem Zug oder Zugteil entsprechende Anzahl an Rädern in Form solcher Repräsentationen im Model berücksichtigt werden.

Um die realen Komponenten der Vorrichtung, insbesondere das Rad 1 mit der Bremse 2 und die Bremssteuerung 3 sowie das Antriebssystem des Rad-/Schiene-Prüfstands mit dem virtuellen Fahrzeugmodell 10 zu koppeln, sind Datenverbindungen bzw. Datenübertragungen 21-25 vorgesehen, die nachfolgend erläutert werden.

Im Berieb der Vorrichtung werden die genannten Betriebsgrößen des Rads 1, insbesondere seine momentante Drehgeschwindigkeit von Sensoren erfasst. Sie werden über eine Datenverbindung 21 an das Fahrzeugmodell 10 übertragen. Unter einer Datenverbindung ist im Rahmen der Anmeldung jegliche Art der Datenübertragung bzw. -weitergabe zu verstehen.

Im Fahrzeugmodell 10 werden auf Basis der Betriebsgrößen des Rads 1 und ggf. der Bremse 2, die über die Datenverbindung 21 übertragen werden, dynamisch kinematische Größen des Schienenfahrzeugs, insbesondere seine Geschwindigkeit, errechnet. Diese wird in einer Datenverbindung 22 an das Antriebssystem des Rad- /Schiene-Prüfstands weiter gegeben. Dieses regelt den Antriebsmotor 4 derart, dass das Schienenrad 6 die berechnete Geschwindigkeit des Schienenfahrzeugs einstellt. Damit spiegelt das Schienenrad 6 dem Rad 1 die sich beim realen Schienenfahrzeug tatsächlich einstellenden kinematischen Bedingungen wider.

Über weitere Datenverbindungen 23 und 24 ist das Fahrzeugmodell 10 zudem mit der Bremssteuerung 3 verbunden. Bei realen Schienenfahrzeugen berücksichtigt eine Bremssteuerung in der Regel die Fahrgeschwindigkeit und andere kinetischen Größen des Schienenfahrzeugs zur Ansteuerung der Bremse. Um dieses adäquat auf dem Rad-/Schiene-Prüfstands wiederspiegeln zu können, werden die vom Fahrzeugmodell 10 ermittelten Fahrparameter an die Bremssteuerung 3 weitergeleitet, die über eine weitere Datenverbindung 25 die Bremse 2 so ansteuert, wie sie es in einer real vorliegenden Umgebung tun würde. Umgekehrt erhält das Fahrzeugmodell 10 die von der Bremssteuerung 3 bestimmten Parameter zur Betätigung der Bremse 2, um einen vergleichbaren Bremsvorgang bei den weiteren Rädern zu simulieren. Dabei kann das Vorliegen einer Zwischenschicht auf der Schiene, z.B. Wasser, Öl, Seife oder Laub mit berücksichtigt werden bzw. es kann ein sich beim realen Rad 1 gegenüber dem Schienenrad 6 einstellender Schlupfeffekt, der sich aus dem Unterschied der Drehbewegung des Schienenrads und des Rads 1 ergibt, mit Hilfe des Kataloges von Adhäsionsmustern, welcher aus Felddaten gespeist ist, auf die Repräsentation 13, 14 der weiteren Räder übertragen werden.

Zusammenfassend ermöglicht die Berücksichtigung des mathematischen Fahrzeugmodells 10, dass auf einem Rad-/Schiene-Prüfstand, der nur einen Teil der tatsächlich vorhandenen Räder oder Achsen eines Schienenfahrzeuges vermisst, dennoch die Fahr- und Bremsdynamik des kompletten Schienenfahrzeugs mit berücksichtigt wird. Das Zusammenwirken von Bremssteuerung 3, Bremse 2 und Rad 1 kann unter realen Bedingungen des Rad-Schiene-Kontakts an einem oder wenigen Rädern in Originalgröße geprüft werden, ohne die Einflüsse der realen Fahrdynamik des gesamten Schienenfahrzeugs zu vernachlässigen.

Alternativ oder zusätzlich zur Untersuchung und Prüfung eines Bremsverhaltens kann auch ein Traktionsverhalten des Schienenfahrzeugs überprüft werden. Zu diesem Zweck ist das Rad 1 mit einem zusätzlichen elektromotorischen Antrieb gekoppelt, von dem es angetrieben werden kann. Auch dabei wird eine sich anhand des Fahrzeugmodells 10 berechnete Geschwindigkeit an das Antriebssystem weitergeleietet und als Umfangsgeschwindigkeit des Schienenrads 6 eingestellt.

### BEZUGSZEICHEN

- 1: Rad (real)
- 2: Bremse (real)
- 3: Bremssteuerung
- 4: Antriebsmotor
- 5: Antriebswelle
- 6: Schienenrad

- 10: Fahrzeugmodell
- 11: Repräsentation des Rads 1 (im Modell)
- 12: Repäsentation der Bremse 2 (im Modell)
- 13, 14: Repäsentation weitere Räder (im Modell)

- 21-25: Datenverbindung / Datenübertragung

## Patentansprüche

1. Verfahren zum Prüfen eines Bremssystems mit einer Bremse (2) für ein Schienenfahrzeug auf einem Rad-/Schiene-Prüfstand, bei dem mindestens ein Rad (1) eines Radsatzes des Schienenfahrzeugs von einem Antriebsmotor (4) über ein Antriebssystem antreibbar ist und durch die Bremse (2) abbremsbar ist, wobei mindestens eine Betriebsgröße des Rads (1) über mindestens einen Sensor erfassbar ist, mit den folgenden Schritten:
- Bereitstellen eines mathematische Modells (10) des Schienenfahrzeugs, wobei das mindestens eine Rad (1) von dem Modell (10) umfasst ist;
- Betreiben des Antriebssystems und
- Einleiten eines simulierten Bremsvorgangs durch Ansteuern der mindestens einen Bremse (2);
- Erfassen der mindestens einen Betriebsgröße des Rads (1) und weiterleiten der erfassten Betriebsgröße an eine Simulationseinheit;
- Simulieren des kinematischen Verhaltens des Schienenfahrzeugs mithilfe des mathematischen Modells (10) unter Berücksichtigung der erfassten Betriebsgröße und Bestimmen einer Geschwindigkeit des simulierten Schienenfahrzeugs; und
- Betreiben des Antriebssystems derart, dass es die durch die Simulation bestimmte Geschwindigkeit des simulierten Schienenfahrzeugs widerspiegelt.

2. Verfahren nach Anspruch 1, wobei das Antriebssystem ein Schienenrad (6) umfasst, auf dem das Rad (1) abrollt, und das in seiner Drehgeschwindigkeit so eingestellt wird, dass seine Umfangsgeschwindigkeit der Geschwindigkeit des simulierten Schienenfahrzeugs entspricht.

3. Verfahren nach Anspruch 1 oder 2, wobei als mindestens eine Betriebsgröße des Rads (1) seine Drehgeschwindigkeit erfasst wird.

4. Verfahren nach einem der Ansprüche 1 bis 3, wobei neben der mindestens einen Betriebsgröße des Rads (1) mindestens eine Betriebsgröße der Bremse (2) gemessen und bei dem Simulieren des Verhaltens des Schienenfahrzeugs berücksichtigt wird.

5. Verfahren nach einem der Ansprüche 1 bis 4, wobei das zu prüfende Bremssystem eine Bremssteuerung (3) umfasst, die die Bremse (2) ansteuert, und wobei Ergebnisse der Simulation des kinematischen Verhaltens des Schienenfahrzeugs an die Bremssteuerung (3) übertragen werden.

6. Verfahren nach einem der Ansprüche 1 bis 5, bei dem das mathematische Modell (10) eine Repräsentation (11, 12) des Rads (1) und/oder der Bremse (12) umfasst.

7. Verfahren nach einem der Ansprüche 1 bis 6, bei dem das mathematische Modell (10) eine Repräsentation (13, 14) weiterer Räder des Schienenfahrzeugs umfasst.

8. Verfahren nach Anspruch 7, bei dem eine beliebige, einem Zug oder Zugteil entsprechende Anzahl an weiteren Rädern in dem Modell abgebildet wird.

9. Verfahren nach Anspruch 5 und 7, bei dem von der Bremssteuerung (3) gelieferete Informationen über einen Bremsvorgang und/oder anhand der mindestens einen Betriebsgröße des Rads (1) gewonnene informationen über einen Bremsvorgang zur Simulation eines Bremsvorgangs der weiteren Räder des Schienenfahrzeugs genutzt werden.

10. Vorrichtung zum Prüfen eines Bremssystems mit einer Bremse (2) für ein Schienenfahrzeug auf einem Rad-/Schiene-Prüfstand, bei dem mindestens ein Rad (1) eines Radsatzes des Schienenfahrzeugs von einem Antriebsmotor (4) über ein Antriebssystem antreibbar ist und durch die Bremse (2) abbremsbar ist, wobei mindestens eine Betriebsgröße des Rads (1) über mindestens einen Sensor erfassbar ist, dadurch gekennzeichent, dass eine Simulationseinheit vorhanden ist, die anhand eines mathematischen Modells (10) des Schienenfahrzeugs dessen Geschwindigkeit bestimmt, wobei das Antriebssystem dazu eingerichtet ist, diese Geschwindigkeit am Rad (1) vorzugeben.

11. Vorrichtung nach Anspruch 10, bei der das Rad (1) mit einem zusätzlichen elektromotorischen Antrieb ausgerüstet ist.

12. Vorrichtung nach Anspruch 11, die dazu eingerichtet ist, eine Traktion des Rades (1) mit Hilfe des zusätzlichen elektromotorischen Antriebs zu testen.
